# FASCICULE DE BREVET EUROPEEN

(11) **EP 1 240 817 B1**
(45) Date de publication et mention de la délivrance du brevet: **26.10.2005**
(21) Numéro de dépôt: 02360087.7
(22) Date de dépôt: 15.03.2002
(51) Int. Cl.: A01D 45/16

(54) **Dispositif pour la récolte du tabac**
Tabakerntemaschine
Tabacco harvester

(30) Priorité: 16.03.2001 FR 0103634
(43) Date de publication de la demande: 18.09.2002
(73) Titulaire: Fux, Jacky, 67390 Elsenheim (FR)
(72) Inventeur: Fux, Jacky, 67390 Elsenheim (FR)
(74) Mandataire: Rhein, Alain

(56) Documents cités:
- FR-A- 2 062 568
- FR-A- 2 165 337
- FR-A- 2 441 999
- FR-A- 2 723 505
- US-A- 4 037 392
- US-A- 4 373 323
- US-A- 4 509 536
- US-A- 5 331 980
- DATABASE WPI Section PQ, Week 198842 Derwent Publications Ltd., London, GB; Class P12, AN 1988-298971 XP002199854 & SU 1 387 901 A (TOBACCO SHAG RES IN), 15 avril 1988 (1988-04-15)

## Description

La présente invention a pour objet un dispositif pour la récolte du tabac, et plus particulièrement pour la récolte et le capsage des feuilles de tête.

Le plant de tabac se présente sous la forme d'une tige le long de laquelle poussent et sont réparties les feuilles. Il existe plusieurs manières de récolter le tabac selon le lieu de production et selon la qualité du tabac.

En ce qui concerne le tabac de qualité, les feuilles sont récoltées en fonction de leur degré de maturité, en sorte que la récolte s'effectue en plusieurs fois afin de prélever lors de plusieurs passages successifs les feuilles du bas, les feuilles médianes, puis dans un dernier passage les feuilles de tête.

On comprendra qu'une telle récolte est coûteuse en main d'oeuvre lorsqu'elle est effectuée manuellement.

C'est pour cette raison qu'il a été proposé des machines permettant de récolter les feuilles. De manière générale, de telles machines comprennent un tapis collecteur et des moyens d'arrachage des feuilles réglables en hauteur en fonction de la position des feuilles à récolter.

Outre le fait que le prélèvement des feuilles est réalisé en aveugle puisque ce n'est pas leur degré de maturité qui est pris en considération mais leur positionnement sur la tige, et que lesdites feuilles peuvent être abîmées, de telles machines présentent l'inconvénient que les feuilles sont prélevées et stockées en vrac, par opposition aux feuilles dites capsées c'est-à-dire rangées parallèlement dans le même sens.

La différence est d'une grande importance, notamment pour ce qui est de l'opération qui suit la récolte à savoir le séchage des feuilles. Le séchage est réalisé lentement dans des séchoirs où sont placés des casiers ajourés contenant les feuilles. En disposant les feuilles en vrac dans les casiers, la chaleur produite par le séchoir se déplace de bas en haut de manière inégale en sorte que le séchage n'est pas uniforme, ce qui est entraîne la formation de tâches sur les feuilles qui perdent ainsi une partie de leur valeur. Le prélèvement et le séchage en vrac en vrac sont donc réservés au tabac de moindre qualité.

Pour pallier cet inconvénient, certains prévoient une manipulation intermédiaire le capsage, qui intervient entre la récolte et le séchage, et qui consiste à ranger les feuilles parallèlement et dans le même sens, c'est-à-dire les queues du même côté. Une telle façon de procéder est très coûteuse en main d'oeuvre, et annule les gains obtenus par la mécanisation de la récolte.

On connaît par le document FR 2.062.568 une machine à récolter le tabac, permettant, après résection du plant de tabac, un effeuillage mécanique par coupe à l'aisselle par enfilement dudit plant dans un organe annulaire coupant. Toutefois une telle machine, outre le fait que les feuilles sont relativement maltraitées ce qui entraîne la formation de tâches, ne permet pas de récolter les feuilles capsées, et nécessite un capsage manuel.

On connaît également par le document US 4.037.392, une machine à effeuiller les plants de tabacs, laquelle comporte une grille au travers de laquelle on fait passer lesdits plants tête la première. De la même manière que pour la machine précédemment décrite, les feuilles sont régulièrement abîmées, et dans tous les cas sont récoltées en vrac, non capsées.

La seule manière actuellement connue de récolter les feuilles de tabac capsées consiste à procéder manuellement.

La récolte manuelle des feuilles de tabac ne nécessite pas de qualification particulière, il est donc habituel d'utiliser les services de scolaires et d'étudiants pendant leurs vacances d'été. Cependant, de manière générale, les feuilles de tête du tabac viennent à maturité après la rentrée scolaire, en sorte qu'il est nécessaire de recourir à une autre main d'oeuvre, plus difficile à trouver et plus onéreuse.

La présente invention a pour but de proposer un dispositif pour la récolte du tabac, et plus particulièrement pour la récolte et le capsage des feuilles de tête permettant de remédier aux divers inconvénients précités.

Le dispositif pour la récolte du tabac, et plus particulièrement pour la récolte et le capsage des feuilles de tête selon l'invention, se caractérise essentiellement en ce qu'il comporte des moyens prévus aptes à réaliser des opérations successives pour chacun des plants de tabac, à savoir:
- un moyen apte à saisir le plant de tabac,
- un moyen apte à couper la tige dudit plant,
- un moyen apte à enserrer pendant un certain temps la tige dudit plant, et disposé en sorte que ledit plant en tombant prenne place dans ledit moyen d'enserrement de manière que ce dernier soit apte à enserrer ladite tige du plant sous la feuille la plus basse de ce dernier,
- un moyen apte à saisir ladite tige par sa base et à exercer une traction axiale sur celle-ci tandis que ladite tige est toujours maintenue enserrée,
- et un moyen apte à recueillir les feuilles capsées, qui est placé sous ledit moyen d'enserrement.

En tirant sur la base de la tige tout en enserrant étroitement celle-ci sous la feuille la plus basse, on obtient le détachement de chacune des feuilles qui demeurent dans la même direction et sont donc capsées lorsqu'elles sont recueillies.

Selon une caractéristique additionnelle du dispositif selon l'invention, le moyen d'enserrement présente au moins deux parties mobiles l'une par rapport à l'autre en sorte de permettre, par leur éloignement le passage de ladite tige, et par leur rapprochement, l'enserrement de cette dernière.

Selon un mode de réalisation particulier du dispositif selon l'invention, le moyen d'anserrement consiste en deux roues dentées d'axes parallèles, évoluant dans des plans différents mais voisins, calées angulairement et tournant en sens inverses en sorte qu'il se crée périodiquement entre elles une lumière issue de la concordance de deux espaces inter-dents, et qui est apte à enserrer étroitement ladite tige.

Selon une caractéristique additionnelle du dispositif selon l'invention quel que soit son mode de réalisation, les parties des éléments destinées à venir au contact de la tige du plant de tabac, présente un bord tranchant dirigé dans la direction opposée au sens de déplacement dudit plan.

Selon une autre caractéristique additionnelle du dispositif selon l'invention, le moyen apte à saisir le plant de tabac consiste en un moyen de guidage associé à un moyen d'entraînement.

Selon un mode de réalisation particulier du dispositif selon l'invention, le moyen apte à saisir la tige par sa base et à exercer une traction axiale sur celle-ci tandis que ladite tige est toujours maintenue enserrée, consiste en deux rouleaux superposés mus en rotation dans des sens inverses en sorte que ladite tige placée entre lesdits rouleaux soit entraînée de l'autre côté de ces derniers.

Selon un autre mode de réalisation particulier du dispositif selon l'invention, le moyen apte à saisir la tige par sa base et à exercer une traction axiale sur celle-ci tandis que ladite tige est toujours maintenue enserrée, consiste en deux paires de roues jumelées, montées sur deux arbres verticaux disposés en aval du moyen apte à enserrer ladite tige, et aptes à se rapprocher et à venir au contact deux à deux en sorte de serrer ladite tige entre les quatre roues, tandis que l'une au moins desdites paires est susceptible d'être animée en rotation autour de son arbre.

Selon un mode de réalisation particulier du dispositif selon l'invention, le moyen apte à recueillir les feuilles tabac, placé sous le moyen d'ennerrement, consiste en une bande de transfert ou analogue.

Selon un autre mode de réalisation particulier du dispositif selon l'invention, le moyen apte à recueillir les feuilles tabac, placé sous le moyen d'enserrement, consiste en un plateau ou analogue, disposé entre une aire de réception du plant coupé et le moyen d'enserrement, séparé longitudinalement en deux parties mobiles en pivotement et se rejoignant selon une ligne parallèle au sens de déplacement de ladite tige, et qui sont prévues aptes à se séparer en s'ouvrant vers le bas après traction complète sur ledit plant pour laisser tomber les feuilles sur un moyen de transfert.

Selon une autre caractéristique additionnelle du dispositif selon l'invention, il est porté, seul ou avec d'autres en juxtaposition, par un châssis auto-tracté ou non, le moyen apte à saisir le plant et le moyen apte à couper la tige dudit plant étant associé à un moyen apte à entraîner ledit plant par-dessus ledit dispositif, et à le coucher, en vue de l'effeuiller, parallèlement au sens de déplacement et pied dirigé en direction de l'avancement.

Les avantages et les caractéristiques du dispositif selon l'invention, ressortiront plus clairement de la description qui suit et qui se rapporte au dessin annexé, lequel en représente un mode de réalisation non limitatif.

Dans le dessin annexé :
La figure 1 représente une vue schématique en perspective d'un premier mode de réalisation du dispositif pour la récolte du tabac selon l'invention.
La figure 2 représente une vue en élévation d'un mode de réalisation particulier d'une partie du même dispositif.
La figure 3 représente une vue schématique partielle en perspective d'un second mode de réalisation du dispositif selon l'invention.
La figure 4 représente une vue schématique en élévation d'une partie du même dispositif.
La figure 5 représente une vue schématique en élévation du même second mode de réalisation du dispositif selon l'invention.
La figure 6 représente une schématique partielle en perspective d'une variante de ce second mode de réalisation du dispositif selon l'invention.

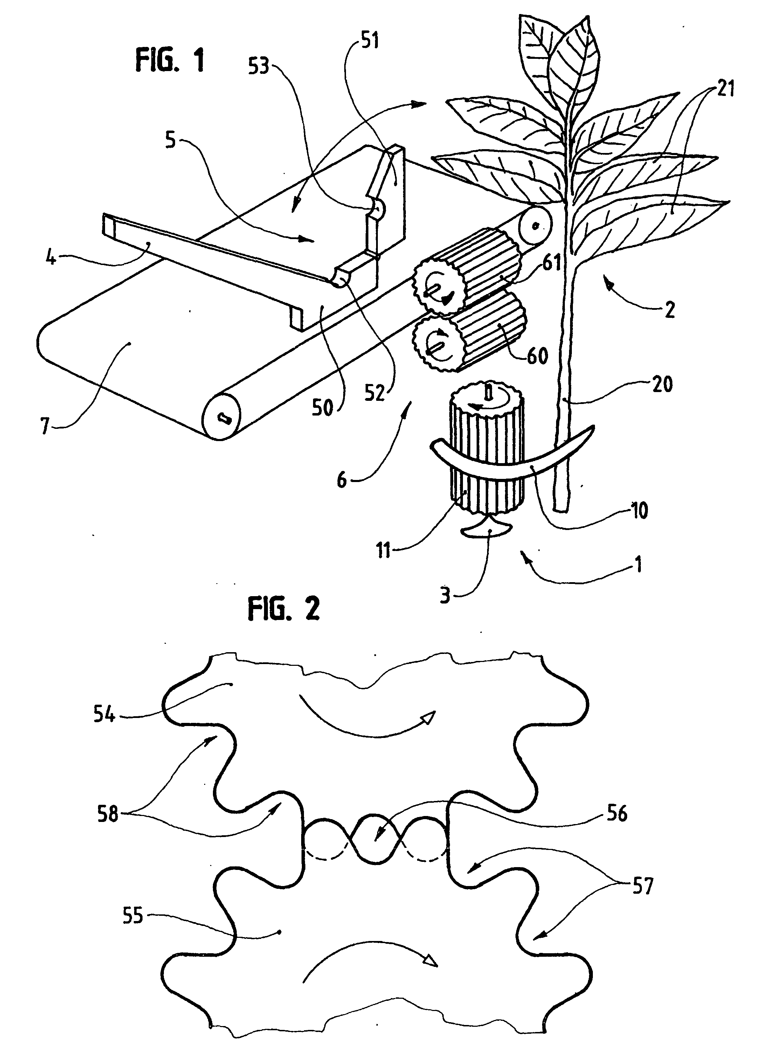

En référence à la figure 1, on peut voir que, dans un premier mode de réalisation, le dispositif pour la récolte du tabac selon l'invention comporte un moyen 1 apte à saisir un plant de tabac 2, qui consiste en un moyen de guidage se présentant, dans ce mode de réalisation, en une rampe 10 coopérant avec un cylindre d'entraînement 11 d'axe vertical. Le moyen de guidage 1 est associé à un moyen de coupe 3, permettant de couper la tige 20 du plant 2 à proximité de sa base.

Après la coupe de la tige 20, le plant 2 tombe et prend une position horizontale, la rampe 10 et le cylindre 11 étant bien entendu agencés, par des moyens de guidage de type connu en soi, et qui sont figurés par un plan incliné 4, pour orienter la chute du plant 2, en sorte que celui-ci prenne place dans un moyen 5 apte à enserrer la tige 20 du plant 2 sous la feuille 21 la plus basse de ce dernier.

Le moyen 5 présente deux parties 50 et 51 dont l'une au moins est mobile par rapport à l'autre, en sorte de pouvoir être maintenues l'une contre l'autre tout en ménageant une lumière apte à contenir étroitement la tige 20 d'un plant 2 de tabac. Dans le mode de réalisation représenté, chacune des parties 50 et 51 comporte un évidement, respectivement 52 et 53, permettant de créer, en coopérant conjointement, la lumière précitée lors du rapprochement des parties 50 et 51.

On notera que la lumière peut être créée uniquement dans l'une ou l'autre des parties, avec toutefois pour inconvénient d'être moins enveloppante.

De la même manière, il est possible que le moyen 5 d'enserrement soit composé de plus de deux parties.

Le moyen 5 d'enserrement est associé à moyen 6 apte à maintenir la tige 20 par sa base et à exercer une traction axiale sur celle-ci. Dans le mode de réalisation représenté, le moyen 6 consiste en deux rouleaux superposés 60 et 61 mus en rotation dans des sens inverses en sorte que la tige 20 d'un plant 2 placée entre les rouleaux 60 et 61 soit entraînée de l'autre côté de ces derniers.

Bien entendu, les deux rouleaux 60 et 61 sont associés à des moyens, non représentés, permettant d'amener l'extrémité inférieure de la tige 20 entre les rouleaux 60 et 61, ces moyens peuvent être disposés en avant des rouleaux 60 et 61, entre ces derniers et le moyen 5 d'enserrement, ou bien latéralement aux rouleaux 60 et 61.

Il est également possible de prévoir une translation simultanée des rouleaux 60 et 61, en direction de l'extrémité inférieure de la tige 20.

L'opération de traction axiale sur la tige 20 est réalisée après que celle-ci soit maintenue enserrée entre les parties 50 et 51, en sorte que lors de cette traction, seule la tige 20 passe au travers de la lumière du moyen d'enserrement 5. De cette opération il résulte que d'une part les feuilles 21 sont décrochées de la tige 20 en venant buter contre les parties 50 et 51 du moyen d'enserrement 5, et que d'autre part elles s'empilent parallèlement les unes aux autres, puis tombent en restant dans cette position.

Les feuilles 21 capsées sont recueillies sur un moyen 7 tel qu'une bande de transfert.

Bien entendu les mises en oeuvre des différents moyens du dispositif selon l'invention sont synchronisées, notamment pour ce qui est de l'ouverture et la fermeture du moyen 5 d'enserrement. Cette synchronisation peut être réalisée au moyen de capteurs de position permettant de détecter un plant 2.

On notera qu'avantageusement, les champs de tabac sont plantés uniformément, les plants de tabac 2 étant régulièrement répartis et espacés, en sorte que la synchronisation est relativement aisée à obtenir.

En référence maintenant à la figure 2, on peut voir un second mode de réalisation du moyen 5 d'enserrement. Il comporte deux roues dentées 54 et 55 d'axes parallèles, évoluant dans des plans différents mais voisins, calées angulairement et tournant en sens inverse en sorte qu'il se crée périodiquement entre elles une lumière 56 issue de la concordance de deux espaces inter-dents 57 et 58.

Avantageusement, afin d'obtenir un parfait calage angulaire, l'une des roues dentées 54 et 55 est menée en rotation, et entraîne l'autre.

En pratique la tige 20 du plant 2 est amenée dans un espace inter-dents 57 de la roue dentée inférieure 55, dont la rotation amène la tige 20 jusqu'à ce qu'elle s'engrène dans un espace inter-dents 58 de la roue dentée supérieure 54, puis, lorsque la tige 21 est enserrée, c'est-à-dire lorsque les espaces inter-dents 57 et 58 sont au droit l'un de l'autre, la tige 20 est tirée par le moyen d'entraînement 6.

On notera que de manière avantageuse, il est prévu d'arrêter la rotation des roues dentées 54 et 55 pendant l'opération de traction sur la tige 20, ce qui peut être réalisé en débrayant l'entraînement.

Ce mode de réalisation présente l'avantage d'un fonctionnement continu, par opposition au mode de réalisation représenté sur la figure 1 dont le fonctionnement est alternatif.

Bien entendu l'ensemble des moyens du dispositif selon l'invention est porté sur une plate-forme, non représentée, montée sur roues et apte à être tirée par un engin tracteur, cette plate-forme comportant des éléments de stockage des feuilles 21 capsées tels que des casiers, le remplissage de ces casiers étant de préférence réalisé par un ou plusieurs opérateurs demeurant sur ladite plate-forme.

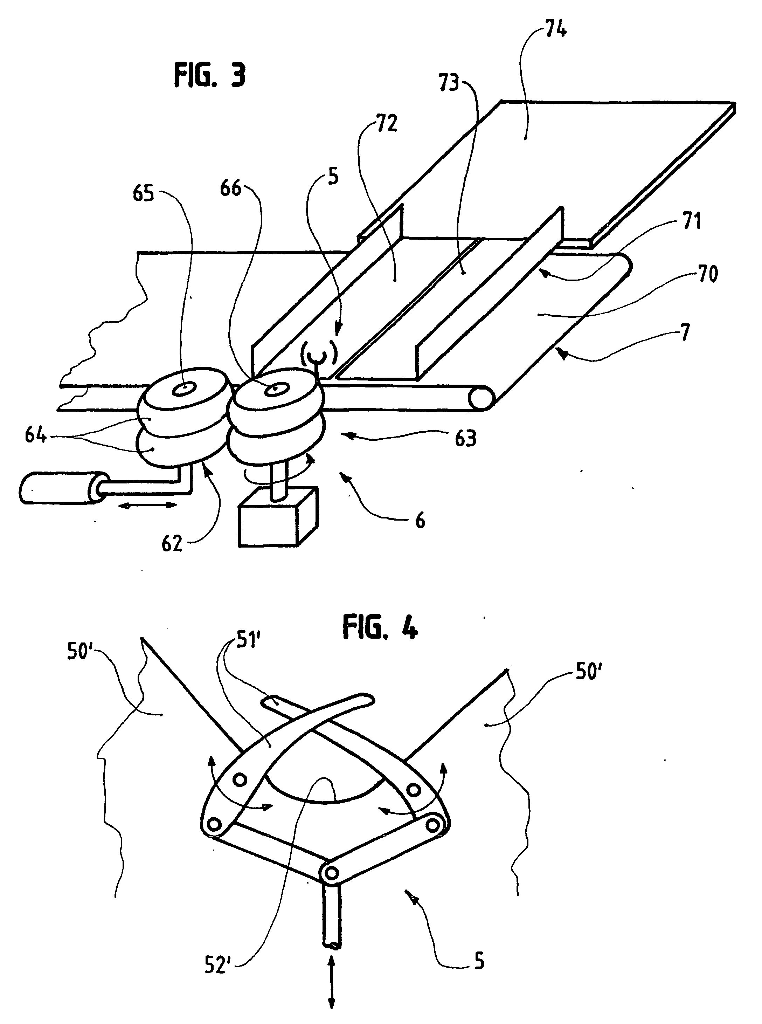

En référence maintenant à la figure 3, on peut voir un second mode de réalisation du dispositif de récolte du tabac selon l'invention.

Sur cette figure ne sont visibles qu'un moyen 5 apte à enserrer la tige d'un plant, un moyen 6 apte à saisir cette dernière par sa base et à exercer une traction axiale, et un moyen 7 apte à recueillir les feuilles de tabac.

Dans ce mode de réalisation le moyen 6 consiste en deux paires 62 et 63 de roues 64 jumelées, montées en rotation sur deux arbres verticaux, respectivement 65 et 66, dont l'un 65, au moins, est mobile en translation horizontale en sorte de permettre la mise en contact des roues 64 de la paire 62 avec celles de la paire 63, et dont l'un 66, au moins, est susceptible d'être mener en rotation.

La tige, non représentée, d'un plant de tabac peut donc être emprisonnée dans l'espace délimité par les quatre roues 63, et la rotation de celles-ci permet d'entraîner la tige.

Les roues 63 consistent de préférence en des jantes garnies de pneus pleins ou non, suffisamment déformables pour assurer une parfaite saisie de la tige quelles que soient les dimensions transversales de celle-ci.
Ce mode de réalisation du moyen 5 est préféré à celui de la figure 1 et utilisant deux rouleaux 60 et 61, par ce que d'une part ces derniers sont sujets à un encrassement rapide préjudiciable à l'entraînement des tiges, et d'autre part le réglage de la pression exercée sur la tige est peu aisé en sorte la tige peut être écrasée ce qui favorise l'encrassement.

Bien entendu, le moyen 6 est associé à des éléments de guidage, non représentés, permettant de positionner le plant de manière adéquate. On peut ainsi envisager, entre autres, de coiffer chacune des paires 63 et 64 d'un déflecteur conique.

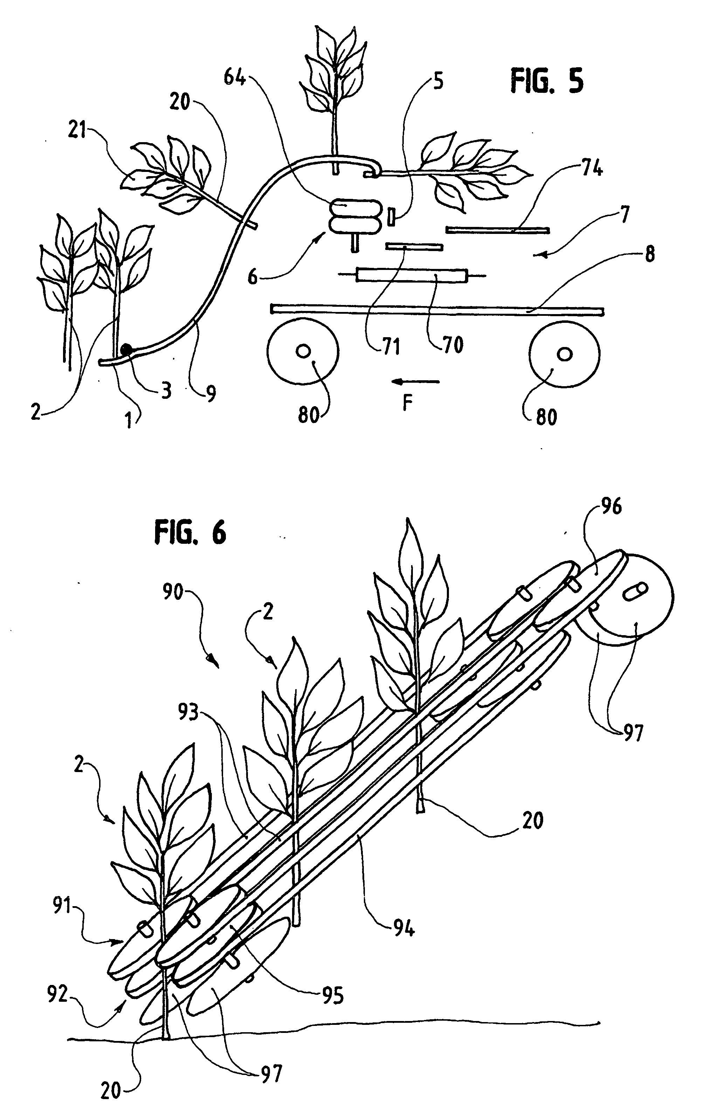

Le moyen 5 d'enserrement d'une tige est disposé en amont du moyen 6, et il est représenté plus en détail sur la figure 4. on peut ainsi voir qu'il comporte un élément récepteur 50', comportant un logement 52' apte à accueillir la tige du plant, et associé à deux pièces 51' mobiles en pivotement pour venir se refermer sur la tige, pour ne laisser qu'un espace de forme sensiblement triangulaire.

Là encore, le moyen 5 d'enserrement est associé à des moyens de guidage du plant, non représentés, qui coopèrent avec ceux du moyen 6.

Le pivotement des pièces 51' est asservi à un moyen de contrôle de la pression exercée sur la tige, en sorte de conserver une pression sensiblement constante et donc une adaptation aux dimensions transversales de la tige.

On notera que de préférence, les bords de l'élément récepteur 50' au niveau du logement 52', et des pièces 51', destinés à venir au contact de la tige, présentent chacun, du côté opposé à celui e regard du moyen 6, un profil coupant. Il y a lieu de remarquer que cette caractéristique peut avantageusement être appliquée aux autres modes de réalisation du moyen 5.

Le moyen 7 apte à recueillir les feuilles de tabac comprend une bande de transfert 70 associée à un moyen intermédiaire de collecte, consistant essentiellement en un plateau 71 s'ouvrant, selon une ligne médiane alignée avec les moyens 5 et 6, en deux parties 72 et 73 montées pivotantes.

Ce plateau 71 permet d'éviter que, lors de l'effeuillage, la chute des feuilles sur la bande de transfert 70 en mouvement entraîne une dispersion de celles-ci. Le plateau 71 permet de réunir les feuilles en un paquet, et surtout de déposer de manière plus délicate les feuilles sur la bande de transfert 70.

L'ouverture des parties 72 et 73 du plateau 71 est bien entendu coordonnée au fonctionnement des moyens 5 et 6. La coordination de la mise en action des différents moyens composant le dispositif selon l'invention nécessite la présence d'un déclencheur qui peut consister en une cellule de détection de la présence d'un plant de tabac en un endroit donné. Dans le mode de réalisation représenté le déclencheur consiste en un plateau 74 destiné à recevoir la partie feuillue du plant de tabac après sa coupe, qui permet de positionner ce dernier, et qui est équipé de moyens de détection de présence, non représentés.

On notera que dans une variante, non représentée, le plateau 71 et la bande de transfert sont remplacée par une cage à l'intérieur de laquelle tombent successivement les paquets de feuilles, la cage étant mobile verticalement afin de conserver une distance sensiblement constante entre le niveau de remplissage et le plant à effeuiller. Après remplissage de la cage, et compactage des feuilles, par resserrement des parois de la cage par exemple, des peignes et contre-peignes de type classique sont introduits par les côtés dans la cage pour saisir la matière.

En référence maintenant à la figure 5, on peut voir de manière schématique une machine pour la récolte du tabac incorporant le second mode de réalisation du dispositif selon l'invention.

Cette machine comporte un châssis 8 monté sur roues 80 et portant le moyen 5 apte à enserrer la tige 20 d'un plant 2, le moyen 6 apte à saisir cette dernière par sa base et à exercer une traction axiale à savoir les roues 64, et le moyen 7 apte à recueillir les feuilles 21 de tabac à savoir les plateaux 71 et 74 et la bande de transfert 70.

Le châssis 8 porte également un moyen de guidage 1 associé à un moyen 3 de coupe de la tige 20 du plant 2 à proximité de sa base, qui coopèrent avec une rampe 9, permettant de translater les plants 2 au-dessus du dispositif d'effeuillage pour les faire retomber un à un dans la position adéquate sur le plateau 74.

Le châssis 8 peut être auto-tracté, il peut également être attelé à un tracteur, dans ce cas il convient d'utiliser une rampe 9 de longueur suffisante pour passer au-dessus de ce dernier.

On notera que dans un mode de construction préférentiel, le châssis 8 porte plusieurs dispositifs d'effeuillage disposés côte à côte transversalement au sens de déplacement F, espacés de la largeur d'un rang de tabac, alimentés chacun par une rampe 9 ou analogue, et utilisant en commun la même bande de transfert 70.

Une telle machine, outre la qualité du travail réalisé puisque le capsage est automatique, permet un gain substantiel en terme de coût de main d'oeuvre.

On notera qu'ont été décrits deux modes de réalisation particuliers du dispositif selon l'invention, comprenant l'un et l'autre pour chaque poste de travail un outil bien spécifique, et il parfaitement possible d'utiliser un ou plusieurs outils de l'un avec l'autre.

En ce qui concerne la rampe 9, celle-ci peut être de différents types, la caractéristique essentielle étant de permettre le transfert des plants de tabac pour les amener au dispositif d'effeuillage dans la position adéquate.

La rampe peut être par exemple celle décrite dans le document FR 2.723.505. Elle peut toutefois, et de préférence, consister en une machine 90 telle que celle représentée sur la figure 6.

Cette machine 90 comporte deux chemins d'amenage 91 et 92 superposés et obliques, constitués chacun de deux bandes, courroies, chaînes ou analogues, respectivement 93 et 94, juxtaposées et tendues chacune entre deux poulies 95 et 96, et aptes à pouvoir enserrer entre deux bandes juxtaposées, 93 et 94, des plants de tabacs 2.

Les bandes 93 et 94 sont associées à des disques de coupe 97 qui permettent de sectionner la tige 20 du plant de tabac 2 immédiatement après son enserrement par les bandes 93 et 94.

Du fait du maintien du plant de tabac 2 en deux points distincts, c'est-à-dire entre les bandes 93 et entre les bandes 94, le plant 2 conserve son orientation originelle, soit sensiblement verticale. Bien entendu les bandes 93 et 94 défilent à la même vitesse, laquelle est sycnhronisée à celle d'avancement de la machine 90.

Par ailleurs les chemins d'amenage 91 et 92 sont décalés l'un par rapport à l'autre, en sorte que d'une part le chemin d'amenage supérieur 91 enserre le plant 2 avant le chemin d'amenage inférieur 92, et que d'autre part il le relâche après. On notera la présence à l'extrémité supérieure du chemin d'amenage inférieur 92 et sous l'extrémité supérieure du chemin d'amenage supérieure 91, d'un moyen de basculement permettant de faire passer le plant 2 de la position verticale à la position horizontale.

Le moyen de basculement peut consister en une simple butée, mais dans l'exemple représenté, il consiste en deux disques 97 en regard inclinés l'un vers l'autre, en sorte de créer une zone de pincement aptes à saisir la tige 20 du plant 2 à la sortie du chemin d'amenage inférieur, et à faire basculer et lâcher le plant 2 après sa sortie du chemin d'amenage supérieur, pour le déposer sur un plateau 74, non représenté, par exemple.

Bien entendu d'autres modes de réalisation de la rampe sus-décrite sont susceptibles d'équiper un dispositif pour la récolte du tabac selon l'invention.

## Revendications

1. Dispositif pour la récolte du tabac, et plus particulièrement pour la récolte et le capsage des feuilles de tête **caractérisé en ce qu'**il comporte des moyens prévus aptes à réaliser des opérations successives pour chacun des plants de tabac (2), à savoir:
- un moyen (1 ; 91, 92) apte à saisir le plant de tabac (2),
- un moyen (3 ; 97) apte à couper la tige (20) dudit plant (2),
- un moyen (5) apte à enserrer pendant un certain temps la tige (20) dudit plant (2), et disposé en sorte que ledit plant (2) en tombant prenne place dans ledit moyen d'enserrement (5) de manière que ce dernier soit apte à enserrer ladite tige (20) du plant (2) sous la feuille (21) la plus basse de ce dernier,
- un moyen (6) apte à saisir ladite tige (20) par sa base et à exercer une traction axiale sur celle-ci tandis que ladite tige (20) est toujours maintenue enserrée,
- et un moyen (7) apte à recueillir les feuilles (21) capsées, qui est placé sous ledit moyen d'enserrement (5).

2. Dispositif selon la revendication 1, **caractérisé en ce que** le moyen d'enserrement (5) présente au moins deux parties (50, 51 ; 57, 58 ; 50', 51') mobiles l'une par rapport à l'autre en sorte de permettre, par leur éloignement le passage de ladite tige (20), et par leur rapprochement, l'enserrement de cette dernière.

3. Dispositif selon la revendication 1 ou la revendication 2, **caractérisé en ce que** le moyen d'enserrement (5) consiste en deux roues dentées (54, 55) d'axes parallèles, évoluant dans des plans différents mais voisins, calées angulairement et tournant en sens inverses en sorte qu'il se crée périodiquement entre elles une lumière (56) issue de la concordance de deux espaces inter-dents (57, 58), et qui est apte à enserrer étroitement ladite tige (20).

4. Dispositif selon la revendication 2 ou la revendication 3, **caractérisé en ce que** les parties des éléments (50, 51 ; 57, 58 ; 50', 51') destinées à venir au contact de la tige (20) du plant (2) de tabac, présente un bord tranchant dirigé dans la direction apposée au sens de déplacement dudit plant (2).

5. Dispositif selon l'une quelconque des revendications précédentes, **caractérisé en ce que** le moyen (1) apte à saisir le plant de tabac (2) consiste en un moyen de guidage (10) associé à un moyen entraînement (11 ; 9 ; 90).

6. Dispositif selon l'une quelconque des revendications précédentes, **caractérisé en ce que** le moyen (6) apte à saisir la tige (20) par sa base et à exercer une traction axiale sur celle-ci tandis que ladite tige (20) est toujours maintenue enserrée, consiste en deux rouleaux superposés (60, 61) mus en rotation dans des sens inverses en sorte que ladite tige (20) placée entre lesdits rouleaux (60, 61) soit entraînée de l'autre côté de ces derniers.

7. Dispositif selon l'une quelconque des revendications 1 à 5, **caractérisé en ce que** le moyen (6) apte à saisir la tige (20) par sa base et à exercer une traction axiale sur celle-ci tandis que ladite tige (20) est toujours maintenue enserrée, consiste en deux paires (62, 63) de roues (64) jumelées, montées sur deux arbres verticaux (65, 66) disposés en aval du moyen d'enserrement (S), et aptes à se rapprocher et à venir au contact deux à deux en sorte de serrer ladite tige (20) entre les quatre roues (64), tandis que l'une au moins desdites paires (62, 63) est susceptible d'être animée en rotation autour de son arbre.

8. Dispositif selon l'une quelconque des revendications précédentes, **caractérisé en ce que** le moyen (7) apte à recueillir les feuilles (21) tabac, placé sous le moyen d'enserrement (5), consiste en une bande de transfert ou analogue.

9. Dispositif selon l'une quelconque des revendications 1 à 8, **caractérisé en ce que** le moyen (7) apte à recueillir les feuilles tabac, placé sous le moyen apte à enserrer pendant un certain temps la tige (20) du plant (2) sous la feuille (21) la plus basse, consiste en un plateau (71) ou analogue, disposé entre une aire de réception (74) du plant (2) coupé et le moyen d'enserrement (5), séparé longitudinalement en deux parties (72, 73) mobiles en pivotement et se rejoignant selon une ligne parallèle au sens de déplacement de ladite tige (20), et qui sont prévues aptes à se séparer en s'ouvrant vers le bas après traction complète sur ledit plant (2) pour laisser tomber les feuilles (21) sur un moyen de transfert (70).

10. Dispositif selon l'une quelconque des revendications précédentes, **caractérisé en ce qu'**il est porté, seul ou avec d'autre en juxtaposition, par un châssis (8) auto-tracté ou non, le moyen (1) apte à saisir le plant (2) et le moyen (3) apte à couper la tige (20) dudit plant (2) étant associé à un moyen (9 ; 90) apte à entraîner ledit plant (2) par-dessus ledit dispositif, et à le coucher, en vue de l'effeuiller, parallèlement au sens (F) de déplacement et pied dirigé en direction de l'avancement.

## Patentansprüche

1. Vorrichtung für die Ernte von Tabak und insbesondere für die Ernte und für das Ausrichten der Kopfblätter, **dadurch gekennzeichnet, daß** sie Mittel umfaßt, die geeignet vorgesehen sind, um aufeinanderfolgende Vorgänge für jeden der Tabaksetzlinge (2) auszuführen, nämlich :
- ein Mittel (1 ; 91, 92), das geeignet ist, um den Tabaksetzling (2) zu packen,
- ein Mittel (3 ; 97), das geeignet ist, um den Stengel (20) des besagten Setzlings (2) zu schneiden,
- ein Mittel (5), das geeignet ist, während einer gewissen Zeit den Stengel (20) des besagten Setzlings (2) zu klemmen, und das derart angeordnet ist, daß der besagte Setzling (2) beim Fallen in dem besagten Klemmittel (5) zurechtgelegt wird, derart, daß dieses letztere geeignet sei, um den besagten Stengel (20) des Setzlings (2) unter dem untersten Blatt (21) dieses letzteren zu umschließen,
- ein Mittel (6), das geeignet ist, um den besagten Stengel (20) bei seinem Stamm zu packen und auf diesen eine axiale Ziehkraft auszuüben, während der besagte Stengel (20) immerzu geklemmt gehalten bleibt,
- und ein Mittel (7), das geeignet ist, um die aufgerichteten Blätter (21) aufzunehmen, welches unter dem besagten Klemmittel (5) gesetzt ist.

2. Vorrichtung nach Anspruch 1, **dadurch gekennzeichnet, daß** das Klemmittel (5) wenigstens zwei Teile (50, 51 ; 57, 58 ; 50', 51') aufweist, die hinsichtlich einander beweglich sind, derart, um, durch ihre Entfernung, den Durchgang des besagten Stengels (20), und, durch ihre Annäherung, das Klemmen dieses letzteren, zu erlauben.

3. Vorrichtung nach Anspruch 1 oder Anspruch 2, **dadurch gekennzeichnet, daß** das Klemmittel (5) aus zwei Zahnrädern (54, 55) mit parallelen Achsen besteht, die sich in benachbarten, aber unterschiedlichen Ebenen bewegen, eckig abgestützt sind und sich in gegenüberliegenden Richtungen drehen, derart, daß sich regelmäßig zwischen ihnen eine Öffnung (56) schafft, entstammend dem Zusammentreffen von zwei Lücken zwischen den Zähnen (57, 58) und geeignet, den besagten Stengel (20) eng zu umschließen.

4. Vorrichtung nach Anspruch 2 oder Anspruch 3, **dadurch gekennzeichnet, daß** die Teile der Elemente (50, 51 ; 57, 58 ; 50', 51'), vorgesehen, um mit dem Stengel (20) des Tabaksetzlings (2) in Berührung zu kommen, einen scharfen Rand aufweisen, der in die zu der Richtung der Verschiebung des besagten Setzlings (2) entgegengesetzten Richtung gelenkt ist.

5. Vorrichtung nach irgendeinem der vorgehenden Ansprüche, **dadurch gekennzeichnet, daß** das Mittel (1), das geeignet ist, um den Tabaksetzling (2) zu packen, aus einem Führungsmittel (10) besteht, das einem Antriebsmittel (11 ; 9 ; 90) zugeordnet ist.

6. Vorrichtung nach irgendeinem der vorgehenden Ansprüche, **dadurch gekennzeichnet, daß** das Mittel (6), das geeignet ist, um den Stengel (20) bei seinem Stamm zu packen und eine axiale Ziehkraft auf diesen letzteren auszuüben, während der besagte Stengel (20) immerzu geklemmt gehalten bleibt, aus zwei übereinander liegenden Rollen (60, 61) besteht, die in umgekehrte Richtungen in Drehung bewogen sind, derart, daß der besagte zwischen den besagten Rollen (60, 61) gesetzte Stengel (20) auf der anderen Seite von diesen Letzteren angetrieben sei.

7. Vorrichtung nach irgendeinem Anspruch 1 bis 5, **dadurch gekennzeichnet, daß** das Mittel (6), das geeignet ist, um den Stengel (20) bei seinem Stamm zu packen und eine axiale Ziehkraft auf diesen letzteren auszuüben, während der besagte Stengel (20) immerzu geklemmt gehalten bleibt, aus zwei Paaren (62, 63) von gekoppelten Rädern (64) besteht, die auf zwei vertikalen Wellen (65, 66) montiert sind, angeordnet unterhalb von dem Klemmittel (5) und geeignet, um sich anzunähern und paarweise in Berührung zu kommen, derart, um den besagten Stengel (20) zwischen den vier Rädern (64) zu drücken, während wenigstens das eine von den Paaren (62, 63) fähig ist, in Drehung um seine Welle angetrieben zu werden.

8. Vorrichtung nach irgendeinem der vorgehenden Ansprüche, **dadurch gekennzeichnet, daß** das Mittel (7), geeignet, um die Tabakblätter (21) aufzunehmen, das unter dem Klemmittel (5) gesetzt ist, aus einem Transferband oder dergleichen besteht.

9. Vorrichtung nach irgendeinem der Ansprüche 1 bis 8, **dadurch gekennzeichnet, daß** das Mittel (7), geeignet, um die Tabakblätter aufzunehmen, das unter dem Mittel gesetzt ist, welches geeignet ist, während einer gewissen Zeit den Stengel (20) des Setzlings (2) unter dem untersten Blatt (21) zu klemmen, aus einem Teller (71) oder dergleichen besteht, angeordnet zwischen einem Aufnahmebereich (74) für den geschnittenen Setzling (2) und dem Klemmittel (5), der der Länge nach in zwei Teile (72, 73) getrennt ist, die in Schwenken beweglich sind und sich nach einer Linie parallel zu der Richtung der Verschiebung des besagten Stengels (20) wieder zusammenfügen, und die geeignet vorgesehen sind, um sich zu trennen, indem sie nach dem vollständigen Ziehen am besagten Setzling (2) sich nach unten öffnen, um die Blätter (21) auf ein Transfermittel (10) fallen zu lassen.

10. Vorrichtung nach irgendeinem der vorgehenden Ansprüche, **dadurch gekennzeichnet, daß** sie, allein oder mit einer anderen in Nebeneinanderstellung, durch einen Rahmen (8) mit oder ohne Selbstantrieb getragen ist, seiend das Mittel (1), geeignet, um den Setzling (2) zu packen, und das Mittel (3), geeignet, um den Stengel (20) des besagten Setzlings (2) zu schneiden, einem Mittel (9; 90) zugeordnet, das geeignet ist, um den besagten Setzling (2) über der besagten Vorrichtung anzutreiben und parallel zu der Verschiebungsrichtung (F) und gelenkt nach der Richtung des Vorschubs hinzulegen, um zu ihn entblättern.

## Claims

1. Device for harvesting tobacco and, in particular, for harvesting and for laying top leaves straight, **characterised in that** it includes means designed capable of carrying out successive operations for each of the tobacco plants (2), namely :
- means (1 ; 91, 92) capable of seizing the tobacco plant (2),
- means (3 ; 97) capable of cutting the stem (20) of said plant (2),
- means (5) capable of clamping for some time the stem (20) of said plant (2), and so arranged that said plant (2) is positioned, when falling, in said clamping means (5) such that the latter is capable of clamping said stem (20) of the plant (2) under the lowest leaf (21) of the latter,
- means (6) capable of seizing said stem (20) at its base and of exerting an axial pulling force on the latter while said stem (20) is still maintained clamped,
- and means (7) capable of collecting the leaves {21) laid straight, which is placed under said clamping means (5).

2. Device according to claim 1, **characterised in that** the clamping means (5) has at least two portions (50, 51 ; 57, 58 ; 50', 51') movable with respect to each other, so as to allow, through their separating apart, the clamping of the latter.

3. Device according to claim 1 or claim 2, **characterised in that** the clamping means (5) consists of two toothed wheels (54, 55) with parallel axes evolving in different, but adjacent planes, angularly fixed and rotating in opposite directions, so as to periodically create between them an opening (56) resulting from the coincidence of two spaces between teeth (57, 58), and which is capable of tightly clamping said stem (20).

4. Device according to claim 2 or claim 3, **characterised in that** the portions of the members (50, 51 ; 57, 58 ; 50', 51') aimed at entering into contact with the stem (20) of the tobacco plant (2) have a cutting edge oriented in the direction opposite the direction of displacement of said plant (2).

5. Device according to any of the preceding claims, **characterised in that** the means (1) capable of seizing the tobacco plant (2) consists of guiding means (10) associated with driving means (11 ; 9 ; 90).

6. Device according to any of the preceding claims, **characterised in that** the means (6) capable of seizing the stem (20) at its base and of exerting an axial pulling force on the latter while said stem (20) is still maintained clamped consists of two superposed rollers (60, 61) rotating in opposite directions, so that said stem (20) positioned between said rollers (60, 61) is taken to the other side of the latter.

7. Device according to any of claims 1 to 5, **characterised in that** the means (6) capable of seizing the stem (20) at its base and of exerting an axial pulling force on the latter while said stem (20) is still maintained clamped consists of two pairs (62, 63) of twin wheels (64) mounted on two vertical shafts (65, 66) arranged downstream of the clamping means (5), and capable of nearing each other and of entering into contact two by two so as to clamp said stem (20) between the four wheels (64), while at least one of said pairs (62, 63) is likely to be rotated about its shaft.

8. Device according to any of the preceding claims, **characterised in that** the means (7) capable of collecting the tobacco leaves (21), positioned under the clamping means (5), consists of a conveyer belt or the like.

9. Device according to any of claims 1 to 8, **characterised in that** the means (7) capable of collecting the tobacco leaves, positioned under the means capable of clamping for some time the stem (20) of the plant (2) under the lowest leaf (21), consists of a tray (71) or the like, arranged between an area for receiving (74) the cut plant (2) and the clamping means (5), longitudinally divided into two pivoting portions (72, 73) which unite according to a line parallel to the direction of displacement of said stem (20), and which are capable of separating by opening downwards upon a complete pulling on said plant (2), in order to let the leaves (21) fall on transfer means (70).

10. Device according to any of the preceding claims, **characterised in that** it is carried, alone or together with other juxtaposed ones, by a self-driven or non-self-driven frame (8), the means (1) capable of seizing the plant (2) and the means (3) capable of cutting the stem (20) of said plant (2) being associated with means (9 ; 90) capable of taking said plant (2) over said device and of laying it, with a view to strip it, parallel to the direction (F) of displacement, with its foot oriented in the forward direction.
